# EUROPEAN PATENT APPLICATION

(11) **EP 4 011 610 A1**
(43) Date of publication of application: **15.06.2022**
(21) Application number: 20849192.8
(22) Date of filing: 06.08.2020
(51) Int. Cl.: B32B 15/20

(54) **ALUMINUM POUCH FILM FOR SECONDARY BATTERY, AND METHOD FOR PRODUCING SAME**

(30) Priority: 06.08.2019 KR 20190095785
(71) Applicant: BTL Advanced Material Co., Ltd., Gyeonggi-do 18559 (KR)
(72) Inventor: CHUN, Sang Wook, Hwaseong-si Gyeonggi-do 18442 (KR); SHIM, Jun Ho, Seoul 08329 (KR); LEE, Soon Sik, Cheongju-si, Chungcheongbuk-do 28121 (KR)
(74) Representative: dompatent von Kreisler Selting Werner - Partnerschaft von Patent- und Rechtsanwälten mbB
(86) International application number: PCT/KR2020/010450
(87) International publication number: WO 2021/025512

(57) **Abstract**

The present invention relates to an aluminum pouch film for a secondary battery, and a method for producing the same. The aluminum pouch film comprises: an aluminum layer; an outer resin layer formed on a first surface of the aluminum layer; a first adhesive layer bonding the aluminum layer and the outer resin layer; an inner resin layer formed on a second surface of the aluminum layer; and a second adhesive layer bonding the aluminum layer and the inner resin layer, wherein the outer resin layer includes a polyimide.

## Description

### [Technical Field]

This application claims the benefits of priority based on Korean Patent Application No. 10-2019-0095785 filed on August 6, 2019, the entire contents of which are incorporated herein by reference.

The present invention relates to an aluminum pouch film for a secondary battery, and a method for producing the same, and more particularly, to an aluminum pouch film for a secondary battery having significantly improved chemical resistance, heat resistance and electrolyte liquid resistance compared to packaging films used in the art, and a method for producing the same.

### [Background Art]

A secondary battery, an electrochemical device recently used for supplying power to various electronic and electrical products, normally refers to a lithium secondary battery, and means a battery having a polymer electrolyte and generating a current through lithium ion migration. As a packaging exterior material used for protecting such a secondary battery, a pouch film in which polymer and metal are laminated is used. Such a pouch film for a secondary battery has a form having an aluminum thin film provided in between in order to protect a battery cell formed with an electrode assembly and an electrolyte liquid filled therein by a subsequent process, and to stably maintain electrochemical properties and the like of the cell, and in order to protect the battery cell from external impact, a polyethylene terephthalate (PET) resin, a nylon film or the like is formed on the aluminum thin film as an outer resin layer.

In the pouch film, an upper pouch film and a lower pouch film are bonded on the outer peripheral surface by thermal bonding or the like, and between a lower surface of the upper pouch film and an upper surface of the lower pouch film, an adhesive layer made of a thermoplastic polyolefin such as polyethylene (PE) or polypropylene (PP) or a copolymer thereof is formed.

A pouch film is generally formed in a predetermined layered structure having an order of an inner resin layer in direct contact with an electrolyte liquid, a second adhesive layer, an aluminum layer, a first adhesive layer and an outer resin layer in direct contact with the outside.

A pouch-type secondary battery formed in the above-described structure may be damaged for various reasons under various circumstances. For example, in the process of storing the electrode assembly inside the pouch, a protruding portion such as an electrode tap or an electrode lead causes damage such as cracks on the pouch inner layer, and the aluminum layer may be exposed due to such damage.

In addition, heat is applied from the outside when heat sealing the pouch film, and by this heat, pin-holes are generated or damage is caused resulting in cracks on the inner adhesive layer, and the aluminum layer may be exposed to an electrolyte liquid or the like.

In addition to the above-described reasons, the adhesive layer formed in a thin film form may be damaged by dropping, impact, pressure, compression or the like, and through the damaged part, the aluminum layer is exposed to an electrolyte liquid or the like.

The aluminum layer exposed to an electrolyte liquid as above may be corroded as the electrolyte liquid penetrated or diffused into the battery causes a chemical reaction with oxygen or moisture, which leads to a problem of generating a corrosive gas and thereby causing swelling that expands inside the battery.

More specifically, LiPF₆ may react with water and oxygen to generate hydrofluoric acid (HF), a corrosive gas. Such hydrofluoric acid may react with aluminum to cause a rapid exothermic reaction, and, as a secondary reaction, is adsorbed on the aluminum surface and penetrates into the system. This increases brittleness of the system resulting in cracks in the pouch film even with micro impact, and herein, lithium and the atmosphere may react due to electrolyte liquid leakage causing ignition.

Accordingly, various aluminum surface modification techniques have been studied to prevent contact with aluminum in the center part even when corrosive hydrofluoric acid is generated as above. As the aluminum surface modification technique, heat treatment, or other conversion treatments, sol-gel coating, primer treatment, treatments with corona, plasma or the like may be included.

However, with the recent trend of gradual increases in the capacity of secondary batteries, aluminum surface modification alone has limits in resolving such problems, and needs for an aluminum pouch film for a secondary battery having excellent chemical resistance, durability, electrolyte liquid resistance and formability have been consistently emerging.

In addition, as the scope of applications for secondary batteries expands to shipbuilding industry, aviation industry and the like as well as electric vehicle industry, on which studies have been conducted for some time, research and development for using high-capacity secondary batteries has been actively conducted.

However, weak chemical resistance and electrolyte liquid resistance have been raised as problems to use a nylon film vulnerable to harsh environments such as high temperature, high salt, high humidity and ultraviolet rays in a pouch film of a high-capacity secondary battery as an outer resin layer. For example, when exposed to moisture including high salt due to cracks in a pouch film, there have been problems such as decline in properties of the nylon film, generation of corrosive gases, or possibility of aluminum in the inner center part, and salt and moisture being brought into contact with each other and reacting.

Accordingly, a method of laminating a polyimide film having excellent chemical resistance and heat resistance as an outer resin layer instead of an existing nylon film has been proposed, however, there has been a problem of decreased adhesive strength when laminating a polyimide film as an outer resin layer. In order to overcome such a problem, studies on a method of laminating a polyimide film on an aluminum layer without decreasing adhesive strength under conditions of high temperature, high salt, high humidity and ultraviolet rays have been required.

### [Prior Art Document]

### [Patent Document]

(Patent Document 1) Korean Laid-open Patent Publication No. 10-2001-7010231 (November 15, 2001) "Packaging Material for Polymer Cell and Method for Producing the Same"

### [Disclosure]

### [Technical Problem]

The present invention has been made in view of the above, and is directed to providing an aluminum pouch film for a secondary battery maintaining excellent chemical resistance, heat resistance, salt resistance and electrolyte liquid resistance that the pouch film even when the secondary battery is used under environments of high temperature, high salt, high humidity and ultraviolet rays, and a method for producing the same.

### [Technical Solution]

According to a first aspect of the present invention, there is provided an aluminum pouch film for a secondary battery, the aluminum pouch film including an aluminum layer, an outer resin layer formed on a first surface of the aluminum layer, a first adhesive layer bonding the aluminum layer and the outer resin layer, an inner resin layer formed on a second surface of the aluminum layer, and a second adhesive layer bonding the aluminum layer and the inner resin layer, wherein the outer resin layer includes a polyimide.

In one embodiment of the present invention, an inner direction surface of the outer resin layer has a contact angle of 60 degrees or less.

In one embodiment of the present invention, the outer resin layer has O_{1S}/C_{1S}, which is determined by X-ray photoelectron spectroscopy, of 1.0 to 3.5.

According to a second aspect of the present invention, there is provided a method for producing an aluminum pouch film for a secondary battery, the method including a) preparing an aluminum layer, b) preparing an outer resin layer, c) bonding the outer resin layer to a first surface of the aluminum layer, and d) bonding the inner resin layer on a second surface of the aluminum layer.

In one embodiment of the present invention, the step b) is an etching step of spraying an etching solution on an inner direction surface of the outer resin layer using a spray method.

In one embodiment of the present invention, immersing the outer resin layer into water is further included after the step b) .

In one embodiment of the present invention, the etching solution is a solution obtained by mixing any one strong acid of hydrochloric acid (HCl), sulfuric acid (H₂SO₄) and nitric acid (HNO₃) with water.

### [Advantageous Effects]

Using an aluminum pouch film for a secondary battery according to the present invention is capable of preventing a chemical reaction occurring when an aluminum layer is brought into contact with water including an electrolyte liquid or salt, and deformation of the pouch film occurring when exposed to stressful environments such as high temperature and ultraviolet rays, and accordingly, risks of expansion inside a battery due to generating a gas inside the battery or explosion by a high temperature can be reduced. In addition, micro-crack occurrences are prevented, which is preferred for increasing battery sizes for mass production of large capacity batteries used in electric vehicles, marine electric ships and the like, and safety for battery environments can be enhanced.

### [Description of Drawings]

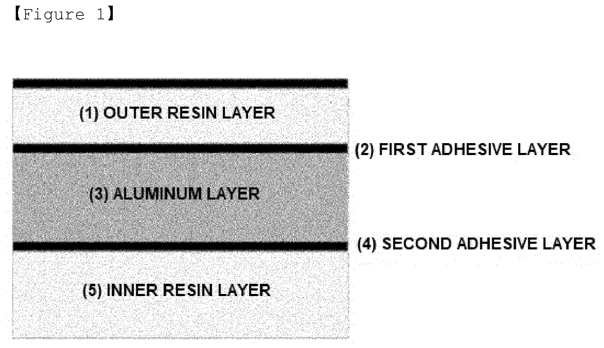

FIG. 1 illustrates a structure of an aluminum pouch film for a secondary battery according to a preferred embodiment of the present invention.

### [Best Mode]

Embodiments provided according to the present invention may all be accomplished by the following descriptions. The following descriptions need to be understood as describing preferred embodiments of the present invention, and it is to be understood that the present invention is not necessarily limited thereto.

The present invention provides an aluminum pouch film for a secondary battery, the film including an aluminum layer, an outer resin layer formed on a first surface of the aluminum layer, a first adhesive layer bonding the aluminum layer and the outer resin layer, an inner resin layer formed on a second surface of the aluminum layer, and a second adhesive layer bonding the aluminum layer and the inner resin layer, wherein the outer resin layer includes a polyimide.

Hereinafter, each constitution of the aluminum pouch film for a secondary battery of the present invention will be described in detail.

### Aluminum Layer

In the film for a secondary battery packaging material of the present invention, aluminum or an aluminum alloy is suitable as a material of a metal thin film used as a barrier layer for preventing penetration of oxygen, moisture or the like from the outside. As the aluminum alloy, an alloy obtained by adding various metals and non-metals to pure aluminum or a stainless alloy may be used. As the aluminum layer, soft aluminum foil may be preferably used, and more preferably, iron-containing aluminum foil is used to provide formability to aluminum foil. As for the aluminum foil, series with high purity has excellent processability, and therefore, aluminum alloy foil in No. 1000 series or No. 8000 series is preferred. in addition, the aluminum base may optionally be an alloy including an atom selected from the group consisting of silicon, boron, germanium, arsenic, antimony, copper, magnesium, manganese, zinc, lithium, iron, chromium, vanadium, titanium, bismuth, potassium, tin, lead, zirconium, nickel, cobalt and combinations thereof. In the iron-containing aluminum foil, the iron may be included preferably in 0.1% by mass to 9.0% by mass and more preferably in 0.5% by mass to 2.0% by mass with respect to 100 of the total aluminum foil mass. When the iron content is less than 0.1% by mass in the aluminum foil, softness of the aluminum layer decreases, and the iron content exceeding 9.0% by mass causes a problem of declining formability. The aluminum foil used in the aluminum layer may have the surface etched or degreased in order to enhance adhesiveness with the inner resin layer, however, the treatment may be skipped to reduce the process speed. The aluminum layer is for preventing penetration of gas and water vapor into a battery from the outside, and the aluminum thin film is required to have no pin holes and processing suitability (pouching, emboss forming). The thickness is preferably from 10 pm to 100 µm, and is more preferably from 30 µm to 50 µm considering processability, oxygen and moisture barrier properties, and the like. Failing to satisfy the above-mentioned range has problems in that the aluminum layer is readily torn and has reduced electrolytic resistance and insulating properties when the thickness is less than 10 µm, and formability is reduced when the thickness exceeds 50 µm.

### Outer Resin Layer

In the aluminum pouch film for a secondary battery of the present invention, the outer resin layer corresponds to a portion in direct contact with hardware, and therefore, is preferably a resin having insulating properties. Accordingly, as a resin used as the outer resin layer, polyester resins such as polyethylene terephthalate, polybutylene terephthalate, polyethylene naphthalate, polybutylene naphthalate, copolymerized polyester and polycarbonate may be used, or polyamide resins or polyimide resins may be used. Preferably, polyimide resins may be used.

Specific examples of the polyester resin may include polyethylene terephthalate (PET), polybutylene terephthalate (PBT), polyethylene naphthalate (PEN), polybutylene naphthalate (PBN), copolymerized polyester, polycarbonate (PC) and the like. Specific examples of the polyester may include polyethylene terephthalate, polybutylene terephthalate, polyethylene naphthalate, polybutylene naphthalate, polyethylene isophthalate, polycarbonate, copolymerized polyester employing ethylene terephthalate as a repeating unit subject, copolymerized polyester employing butylene terephthalate as a repeating unit subject and the like. In addition, specific examples of the copolymerized polyester employing ethylene terephthalate as a repeating unit subject may include copolymer polyester polymerized with ethylene isophthalate employing ethylene terephthalate as a repeating unit subject, polyethylene (terephthalate/isophthalate), polyethylene (terephthalate/adipate), polyethylene (terephthalate/sodium sulfoisophthalate), polyethylene (terephthalate/sodium isophthalate), polyethylene (terephthalate/phenyl-dicarboxylate), polyethylene (terephthalate/decane dicarboxylate) and the like. In addition, examples of the copolymerized polyester employing butylene terephthalate as a repeating unit subject may include copolymer polyester polymerized with butylene isophthalate employing butylene terephthalate as a repeating unit subject, polybutylene (terephthalate/adipate), polybutylene (terephthalate/sebacate), polybutylene (terephthalate/decane dicarboxylate), polybutylene naphthalate and the like. These polymers may be used either alone as one type, or as a combination of two or more types.

Specific examples of the polyamide resin may include aliphatic-based polyamides such as nylon 6, nylon 66, nylon 610, nylon 12, nylon 46, and a copolymer of nylon 6 and nylon 66; aromatic group-including polyamides such as hexamethylenediamine-isophthalic acid-terephthalic acid copolymerized polyamide such as nylon 61, nylon 6T, nylon 6IT and nylon 6I6T (I represents isophthalic acid, and T represents terephthalic acid) including structural units derived from terephthalic acid and/or isophthalic acid, and polymeta-xylene adipamide (MXD6); alicyclic-based polyamides such as polyaminomethylcyclohexyl adipamide (PACM6); or polyamides copolymerizing a lactam component and an isocyanate component such as 4,4'-diphenylmethane-diisocyanate, polyesteramide copolymers or polyetheresteramide copolymers, which are copolymers of copolymerized polyamide and polyester or polyalkylene ether glycol; copolymers thereof, and the like. These polyamides may be used either alone as one type, or as a combination of two or more types.

The nylon film is mainly used as a packaging film by having excellent heat resistance, cold resistance and mechanical strength as well as having excellent disruptive strength, pin-hole resistance, gas barrier properties and the like. Specific examples of the nylon film may include polyamide resins, that is, nylon 6, nylon 66, a copolymer of nylon 6 and nylon 66, nylon 610, polymeta-xylene adipamide (MXD6) and the like. When laminating the outer resin layer, the laminated outer resin layer preferably has a thickness of 10 µm to 30 µm or greater, and particularly preferably has a thickness of 12 µm to 25 µm. Failing to satisfy the above-mentioned range has problems in that the outer resin layer is readily torn due to declined physical properties when the thickness is less than 10 µm, and formability is reduced when the thickness exceeds 30 µm.

In the outer resin layer as above, a polyimide film may be preferably used as a packaging film of a secondary battery. Polyimide is classified as a general-purpose engineering plastic, and has excellent heat resistance, insulating properties, flexibility and non-flammability with no changes in the properties in a wide range of temperatures from 273 degrees below zero to 400 degrees above zero. Due to such properties, polyimide is used as a material in various fields such as space suits, mobile phone·fuel cell cases, display and military devices, and the like.

The polyimide film used as the outer resin layer may be prepared after going through surface treatment through etching before lamination. In the etching process, a solution obtained by mixing any one strong acid of hydrochloric acid (HCl), sulfuric acid (H2SO4) and nitric acid (HNO3) with water may be used, and as the etching method, a method of immersing the polyimide film into the mixture solution for a certain period of time or spraying the mixture solution using a spray method is preferred, however, the method is not limited thereto. Particularly, in the spray method, the mixture solution is sprayed on an inner direction surface of the polyimide resin, and then aged for a certain period of time at room temperature. After that, the polyimide film is rinse treated to remove residues, and then used as the outer resin layer.

The inner direction surface of the outer resin layer may have a contact angle of 60 degrees of less, preferably 40 degrees of less, more preferably 20 degrees of less, and even more preferably 10 degrees of less. When the inner direction surface of the outer resin layer has a contact angle of exceeding 60 degrees, adhesive strength decreases under environments of moisture, salt, high heat, ultraviolet rays and the like causing a problem of making lamination on the aluminum layer difficult.

The outer resin layer may have O_{1S}/C_{1S}, which is determined by X-ray photoelectron spectroscopy (XPS), of 1.0 to 3.5, preferably 2.3 to 3.5 and more preferably 2.8 to 3.5. As the O₁ₛ/C₁ₛ value determined by X-ray photoelectron spectroscopy increases, the imide bond in the polyimide is decomposed through hydrolysis, which may increase active sites capable of reacting and bonding with the first adhesive layer to describe later. Accordingly, adhesive strength between the outer resin layer of the present invention and the first adhesive layer may be enhanced.

### First Adhesive Layer

The first adhesive layer is a layer increasing adhesion between the outer resin layer-aluminum foil layer. The adhesive layer is formed by an adhesive resin capable of adhering a base layer and a metal layer. The adhesive resin used for forming the adhesive layer may be a two-component curable adhesive resin or a one-component curable adhesive resin. In addition, an adhesion mechanism of the adhesive resin used for forming the adhesive layer is not particularly limited as well, and any one of chemical reaction type, solvent volatilization type, heat melting type, heat pressure type and the like may be used.

Specific examples of the resin component of the adhesive resin used for forming the adhesive layer may include polyester-based resins such as polyethylene terephthalate, polybutylene terephthalate, polyethylene naphthalate, polybutylene naphthalate, polyethylene isophthalate, polycarbonate and copolymerized polyester; polyether-based adhesives; polyurethane-based adhesives; epoxy-based resins; phenol resin-based resins; polyamide-based resins such as nylon 6, nylon 66, nylon 12 and copolymerized polyamide; polyolefin-based resins such as polyolefin, acid-modified polyolefin and metal-modified polyolefin; polyvinyl acetate-based resins; cellulose-based adhesives; (meth)acryl-based resins; polyimide-based resins; amino resins such as a urea resin and a melamine resin; rubber such as chloroprene rubber, nitrile rubber and styrene-butadiene rubber; silicone-based resins; fluorinated ethylene propylene copolymers and the like. These adhesive resin components may be used either alone as one type, or as a combination of two or more types.

The combination type of two or more types of the adhesive resin components is not particularly limited, and examples of the adhesive resin component may include a composite resin of polyamide and acid-modified polyolefin, a composite resin of polyamide and metal-modified polyolefin, polyamide and polyester, a composite resin of polyester and acid-modified polyolefin, a composite resin of polyester and metal-modified polyolefin, and the like. Among these, polyurethane-based two-component curable adhesive resins; polyamide, polyester, or blended resins of these and modified polyolefin may be included in terms of having excellent malleability, durability or anti-restraint function under high humidity condition, or anti-deteriorating function during heat sealing, and effectively suppressing occurrences of delamination through suppressing a decrease in the lamination strength between the base layer and the metal layer.

The first adhesive layer is a layer increasing adhesion between the base layer-aluminum foil layer.

The first adhesive layer may be formed using known materials as an adhesive used for laminating a resin film and aluminum foil. Examples of the corresponding adhesive may include a main agent including a polyol such as polyester polyol, polyether polyol, acrylic polyol or carbonate polyol, and a polyurethane-based adhesive containing a curing agent including a difunctional or higher isocyanate compound. A polyurethane-based resin is formed by acting the curing agent on the main agent.

First, a polyol may be included as the component of the adhesive.

Examples of the polyol compound used for the urethane-type adhesive may include polyester polyol, polyesterpolyurethane polyol, polyether polyol, polyetherpolyurethane polyol and the like. Hydroxyl group equivalents and weight average molecular weights of these polyol compounds are not particularly limited as long as the above-mentioned properties are satisfied finally in relation to the isocyanate-based compound to combine, and for example, the hydroxyl group equivalent (number/mol) may be from 0.5 to 2.5 and preferably from 0.7 to 1.9, and the weight average molecular weight may be from 500 to 120000 and preferably from 1000 to 80000. Among these polyol compounds, polyester polyol, polyesterpolyurethane polyol and polyetherpolyurethane polyol are preferably included. These polyol compounds may be used either alone as one type, or as a combination of two or more types.

As the polyester polyol, materials obtained by reacting at least one type of polybasic acid and at least one type of diol may be used. Examples of the polybasic acid may include dibasic acids such as aliphatic-based dibasic acids such as succinic acid, glutaric acid, adipic acid, pimelic acid, suberic acid, azelaic acid, sebacic acid, and brassylic acid, and aromatic-based dibasic acids such as isophthalic acid, terephthalic acid and naphthalene dicarboxylic acid, and the like. Examples of the diol may include aliphatic-based diols such as ethylene glycol, propylene glycol, butanediol, neopentyl glycol, methyl pentanediol, hexanediol, heptanediol, octanediol, nonanediol, decanediol and dodecanediol, alicyclic-based diols such as cyclohexanediol and hydrogen-added xylylene glycol, and aromatic-based diols such as xylylene glycol, and the like.

In addition, as the polyester polyol, polyester urethane polyols obtained by chain-extending hydroxyl groups at both ends of the polyester polyol using a single product of isocyanate compound, or an adduct product, a biuret product or an isocyanurate product including at least one type of isocyanate compound, and the like may be included. Examples of the isocyanate compound may include 2,4- or 2,6-tolylene diisocyanate, xylylene isocyanate, 4,4'-diphenylmethane diisocyanate, methylene diisocyanate, isopropylene diisocyanate, lysine diisocyanate, 2,2,4- or 2,4,4-trimethylhexamethylene diisocyanate, 1,6-hexamethylene diisocyanate, methylcyclohexane diisocyanate, isophorone diisocyanate, 4,4'-dicyclohexylmethane diisocyanate, isopropylidene dicyclohexyl-4,4'-diisocyanate and the like.

As the acrylic polyol, copolymers having poly(meth)acrylic acid as a main component may be included. Examples of the corresponding copolymer may include materials obtained by copolymerizing, starting with hydroxyl group-containing monomers such as 2-hydroxyethyl (meth)acrylate and 2-hydroxypropyl (meth)acrylate, alkyl (meth)acrylate-based monomers in which the alkyl group is a methyl group, an ethyl group, an n-propyl group, an i-propyl group, an n-butyl group, an i-butyl group, a t-butyl group, a 2-ethylhexyl group or a cyclohexyl group; amide group-containing monomers such as (meth)acrylamide, N-alkyl (meth)acrylamide, N,N-dialkyl (meth)acrylamide (the alkyl group is a methyl group, an ethyl group, an n-propyl group, an i-propyl group, an n-butyl group, an i-butyl group, a t-butyl group, a 2-ethylhexyl group, a cyclohexyl group or the like), N-alkoxy (meth)acrylamide, N,N-dialkoxy (meth)acrylamide (the alkoxy group is a methoxy group, an ethoxy group, a butoxy group, an isobutoxy group or the like), N-methylol (meth)acrylamide and N-phenyl (meth)acrylamide; glycidyl group-containing monomers such as glycidyl (meth)acrylate and allyl glycidyl ether; silane-containing monomers such as (meth)acryloxypropyl trimethoxysilane and (meth)acryloxypropyl triethoxysilane; and isocyanate group-containing monomers such as (meth)acryloxypropyl isocyanate.

As the carbonate polyol, materials obtained by reacting a carbonate compound and diol may be used. As the carbonate compound, dimethyl carbonate, diphenyl carbonate, ethylene carbonate and the like may be used. As the diol, aliphatic diols such as ethylene glycol, propylene glycol, butanediol, neopentyl glycol, methylpentanediol, hexanediol, heptanediol, octanediol, nonanediol, decanediol and dodecanediol, alicyclic diols such as cyclohexanediol and hydrogen-added xylylene glycol, aromatic diols such as xylylene glycol, and the like may be used.

In addition, polycarbonate urethane polyols obtained by chain-extending a hydroxyl group at the end of the carbonate polyol using the above-described isocyanate compound may be used.

Next, an isocyanate may be included as the component of the adhesive.

Examples of the isocyanate-based compound used for the urethane-type adhesive may include polyisocyanate, adduct products thereof, isocyanurate modified products thereof, carbodiimide modified products thereof, allophanate modified products thereof, biuret modified products thereof and the like. Specific examples of the polyisocyanate may include aromatic diisocyanates such as diphenylmethane diisocyanate (MDI), polyphenylmethanediisocyanate (polymeric MDI), toluenediisocyanate (TDI), hexamethylenediisocyanate (HDI), bis(4-isocyanatecyclohexyl)methane (H12MDI), isophoronediisocyanate (IPDI), 1,5-naphthalenediisocyanate (1,5-NDI), 3,3'-dimethyl-4,4'-diphenylenediisocyanate (TODI) and xylenediisocyanate (XDI); aliphatic diisocyanates such as trimethylene diisocyanate, hexamethylene diisocyanate, trimethylhexamethylene diisocyanate and isophorone diisocyanate; alicyclic diisocyanates such as 4,4'-methylenebis(cyclohexylisocyanate) and isophorone diisocyanate, and the like. Specific examples of the adduct product may include those obtained by adding trimethylolpropane, glycol or the like to the polyisocyanate. Among these isocyanate-based compounds, preferably polyisocyanate and adduct products thereof; more preferably aromatic diisocyanate, adduct products thereof and isocyanurate modified products thereof; even more preferably MDI, polymeric MDI, TDI, adduct products thereof and isocyanurate modified products thereof; and particularly preferably adduct products of MDI, adduct products of TDI, polymeric MDI, and isocyanurate modified products of TDI may be included. These isocyanate-based compounds may be used either alone as one type, or as a combination of two or more types.

As the difunctional or higher isocyanate compound used as the curing agent, types of the isocyanate compounds used as a chain extender may be used, and, although repeating, single products of isocyanate compounds selected from among 2,4- or 2,6-tolylene diisocyanate, xylylene isocyanate, 4,4'-diphenylmethane diisocyanate, methylene diisocyanate, isopropylene diisocyanate, lysine diisocyanate, 2,2,4- or 2,4,4-trimethylhexamethylene diisocyanate, 1,6-hexamethylene diisocyanate, methylcyclohexane diisocyanate, isophorone diisocyanate, 4,4'-dicyclohexylmethane diisocyanate and isopropylidene dicyclohexyl-4,4'-diisocyanate, or adduct products, biuret products, isocyanurate products including at least one type of the isocyanate compound selected from among the isocyanate compounds.

As the mixed amount of the curing agent, 1 part by mass to 100 parts by mass is preferred with respect to 100 parts by mass of the main agent, and 5 parts by mass to 50 parts by mass is more preferred. The content being less than 1 parts by mass may lead to concern of not achieving performance in terms of adhesion or electrolyte liquid resistance. When the content exceeds 100 parts by mass, an excess isocyanate group is present, which may affect adhesive film quality by the remaining of unreacted materials, or hardness.

For facilitating adhesion, a carbodiimide compound, an oxazoline compound, an epoxy compound, a phosphorous compound, a silane coupling agent and the like may be mixed to the polyurethane-based adhesive.

Examples of the carbodiimide compound may include N,N'-di-o-toluyl carbodiimide, N,N'-diphenyl carbodiimide, N,N'-di-2,6-dimethylphenyl carbodiimide, N,N'-bis(2,6-diisopropylphenyl)carbodiimide, N,N'-dioctyldecyl carbodiimide, N-triyl-N'-cyclohexyl carbodiimide, N,N'-di-2,2-di-t-butylphenyl carbodiimide, N-triyl-N'-phenyl carbodiimide, N,N'-di-p-nitrophenyl carbodiimide, N,N'-di-p-aminophenyl carbodiimide, N,N'-di-p-hydroxyphenyl carbodiimide, N,N'-di-cyclohexyl carbodiimide, N,N'-di-p-toluyl carbodiimide and the like.

Examples of the oxazoline compound may include monooxazoline compounds such as 2-oxazoline, 2-methyl-2-oxazoline, 2-phenyl-2-oxazoline, 2,5-dimethyl-2-oxazoline and 2,4-diphenyl-2-oxazoline, and dioxazoline compounds such as 2,2'-(1,3-phenylene)-bis(2-oxazoline), 2,2'-(1,2-ethylene)-bis(2-oxazoline), 2,2'-(1,4-butylene)-bis(2-oxazoline) and 2,2'-(1,4-phenylene)-bis(2-oxazoline) .

Examples of the epoxy compound may include diglycidyl ether of aliphatic diol such as 1,6-hexanediol, neopentyl glycol and polyalkylene glycol; polyglycidyl ether of aliphatic polyol such as sorbitol, sorbitan, polyglycerol, pentaerythritol, diglycerol, glycerol and trimethylolpropane; polyglycidyl ether of alicyclic polyol such as cyclohexane dimethanol; diglycidyl ester or polyglycidyl ester of aliphatic or aromatic polycarboxylic acid such as terephthalic acid, isophthalic acid, naphthalene dicarboxylic acid, trimellitic acid, adipic acid and sebacic acid; diglycidyl ether or polyglycidyl ether of polyphenol such as resorcinol, bis-(p-hydroxyphenyl)methane, 2,2-bis-(p-hydroxyphenyl)propane, tris-(p-hydroxyphenyl)methane and 1,1,2,2-tetrakis(p-hydroxyphenyl)ethane; N-glycidyl derivatives of amine such as N,N'-diglycidyl aniline, N,N,N-diglycidyl toluidine and N,N,N',N'-tetraglycidyl-bis-(p-aminophenyl)methane, triglycidyl derivatives of aminophenol; triglycidyltris(2-hydroxyethyl)isocyanurate, triglycidyl isocyanurate, ortho-cresol-type epoxy, phenol novolac-type epoxy resin and the like.

Examples of the phosphorous-based compound may include tris(2,4-di-t-butylphenyl)phosphite, tetrakis(2,4-di-t-butylphenyl)-4,4'-biphenylene phosphonite, bis(2,4-di-t-butylphenyl)pentaerythritol-di-phosphite, bis(2,6-di-t-butyl-4-methylphenyl)pentaerythritol-di-phosphite, 2,2-methylenebis(4,6-di-t-butylphenyl)octyl phosphite, 4,4'-butylidene-bis(3-methyl-6-t-butylphenyl-ditridecyl)phosphite, 1,1,3-tris(2-methyl-4-ditridecyl phosphite-5-t-butyl-phenyl)butane, tris(mixed mono- and dinonylphenyl)phosphite, tris(nonylphenyl)phosphite, 4,4'-isopropylidenebis(phenyl-dialkyl phosphite) and the like.

Examples of the silane coupling agent may include various silane coupling agents such as vinyltriethoxysilane, vinyltris(β-methoxyethoxy)silane, γ-methacryloxypropyltrimethoxysilane, vinyltriacetoxysilane, γ-glycidoxypropyltrimethoxysilane, γ-glycidoxypropyltriethoxysilane, β-(3,4-epoxycyclohexyl)ethyltrimethoxysilane, γ-chloropropylmethoxysilane, vinyltrichlorosilane, γ-mercaptopropyl trimethoxysilane, γ-aminopropyltriethoxysilane and N-β(aminoethyl)-γ-aminopropyltrimethoxysilane.

The adhesive used for forming the adhesive layer satisfying properties of a packaging film for a secondary battery of the present invention may preferably include urethane-type adhesives including at least one type of polyol compound selected from the group consisting of polyester polyol, polyesterpolyurethane polyol, polyether polyol and polyetherpolyurethane polyol, and at least one type of isocyanate-based compound selected from the group consisting of aromatic diisocyanate, adduct products thereof and isocyanurate modified products thereof; more preferably include urethane-type adhesives including at least one type of polyol compound selected from the group consisting of polyester polyol, polyesterpolyurethane polyol, polyether polyol and polyetherpolyurethane polyol, and at least one type of isocyanate-based compound selected from the group consisting of MDI, polymeric MDI, TDI, adduct products thereof and isocyanurate modified products thereof.

In addition, in the adhesive including the polyol compound (main agent) and the isocyanate-based compound (curing agent), a ratio thereof is properly set depending on the properties to be provided in the adhesive layer, and for example, the ratio of the isocyanate group of the isocyanate-based compound per 1 mole of the hydroxyl group of the polyol compound may be from 1 mole to 30 moles, and preferably from 3 moles to 20 moles.

The first adhesive layer preferably has a thickness of 2 µm to 10 µm and more preferably 3 µm to 5 µm considering adhesiveness with the outer resin layer and thickness after forming. Failing to satisfy the above-mentioned range may cause problems in that adhesiveness decreases when the thickness is less than 2 µm, and cracks may occur when the thickness exceeds 10 µm.

### Inner Resin Layer

In the aluminum pouch film for a secondary battery of the present invention, polyolefins such as polyethylene (PE) or polypropylene (PP), or copolymers thereof may be used as the inner resin layer. The inner resin layer is not particularly limited thereto, and is formed with a resin layer selected from the group consisting of, in addition to the polyolefin-based such as polyethylene, polypropylene and polybutylene, ethylene copolymers, propylene copolymers, polyester-based, polyamide-based, polycarbonate-based, fluorine-based, silicone-based, acryl-based, ethylene-propylene-diene-monomer rubber (EPDM) and mixtures thereof. Preferably, a polyolefin-based resin layer or a composite resin layer of polybutadiene and polyolefin may be used.

Specific examples of the polyolefin used above may include polyethylene such as low-density polyethylene, medium-density polyethylene, high-density polyethylene or linear low-density polyethylene; polypropylene such as homopolypropylene, block copolymers of polypropylene (for example, block copolymer of propylene and ethylene) and random copolymers of polypropylene (for example, random copolymer of propylene and ethylene); a ternary copolymer of ethylene-butene-propylene; and the like. Among these polyolefins, polyethylene and polypropylene are preferably included.

Using a polyolefin such as polyethylene or polypropylene or a copolymer thereof in the inner resin layer is preferred since processability such as lamination is favorable as well as having properties required as a packaging material for a secondary battery such as favorable heat sealing properties, moisture-proof properties and heat resistance. The thickness of the polymer layer of the inner resin layer is preferably from 20 µm to 100 µm and more preferably from 30 µm to 80 µm considering formability, insulating properties, electrolyte liquid resistance and the like. Failing to satisfy the above-mentioned range may cause problems of reducing formability, insulating properties and electrolyte liquid resistance.

### Second Adhesive Layer

The second adhesive layer is a layer increasing adhesion between the inner resin layer-aluminum foil layer.

In the aluminum pouch film for a secondary battery of the present invention, polyurethane, acid-modified polyolefin resin, epoxy or the like may be used as the second adhesive layer. Specific examples of the second adhesive may include maleic anhydride polypropylene (MAHPP) and the like.

Examples of the heat-adhesive olefin-based resin may include polyethylene, an ethylene-α-olefin copolymer, an ethylene-acrylic acid copolymer, an ethylene-methacrylic acid copolymer, an ethylene-acrylic acid ester copolymer, an ethylene-methacrylic acid ester copolymer, an ethylene- vinyl acetate copolymer, ionomers, polypropylene, maleic anhydride-modified polypropylene, an ethylene-propylene copolymer, a propylene-1-butene-ethylene copolymer and the like, and may preferably include one or more types of olefin-based resins selected from the group consisting of polypropylene, an ethylene-propylene copolymer and a propylene-1-butene-ethylene copolymer.

The acid-modified polyolefin used for forming the second adhesive layer is a polymer modified by graft polymerizing polyolefin with unsaturated carboxylic acid. Specific examples of the acid-modified polyolefin may include polyethylene such as low-density polyethylene, medium-density polyethylene, high-density polyethylene or linear low-density polyethylene; crystalline or amorphous polypropylene such as homopolypropylene, block copolymers of polypropylene (for example, block copolymer of propylene and ethylene) and random copolymers of polypropylene (for example, random copolymer of propylene and ethylene); a ternary copolymer of ethylene-butene-propylene, and the like. Among these polyolefins, polyolefins having at least propylene as a forming monomer are preferably included, and a ternary copolymer of ethylene-butene-propylene and a random copolymer of propylene-ethylene may be more preferably included in terms of heat resistance. Examples of the unsaturated carboxylic acid used for modification may include maleic acid, acrylic acid, itaconic acid, crotonic acid, maleic anhydride, itaconic anhydride and the like. Among these unsaturated carboxylic acids, maleic acid and maleic anhydride are preferably included. The acid-modified polyolefin may be used either alone as one type, or as a combination of two or more types.

The second adhesive layer preferably has a thickness of 2 µm to 10 µm and more preferably 3 µm to 5 µm considering adhesiveness with the inner resin layer and thickness after forming. Failing to satisfy the above-mentioned range may cause problems in that adhesiveness decreases when the thickness is less than 2 µm, and cracks may occur when the thickness exceeds 5 µm.

When laminating the inner resin layer and the aluminum layer on the second adhesive layer, the method is not particularly limited, however, a dry lamination method, a heat lamination method or an extrusion lamination method may be preferably used for the lamination.

### Method for Producing Aluminum Pouch Film for Secondary Battery

The present invention provides a method for producing an aluminum pouch film for a secondary battery, the method including a) preparing an aluminum layer, b) preparing an outer resin layer, c) bonding the outer resin layer to a first surface of the aluminum layer and d) bonding the inner resin layer to a second surface of the aluminum layer.

### a) Preparing Aluminum Layer

As the aluminum layer of the aluminum pouch film for a secondary battery of the present invention, soft aluminum foil may be preferably used, and aluminum foil including iron may be more preferably used in order to further provide pin-hole resistance and softness during cold forming. In the aluminum foil including iron, the iron may be preferably included in 0.1% by mass to 9.0% by mass and more preferably included in 0.5% by mass to 2.0% by mass with respect to 100% by mass of the whole aluminum foil. When the iron content is less than 0.1% by mass with respect to 100% by mass of the whole aluminum foil, softness of the aluminum layer decreases, and including the iron exceeding 9.0% by mass has a problem of reducing formability.

The thickness of the aluminum layer is preferably from 10 µm to 100 µm and more preferably from 30 µm to 50 µm considering pin-hole resistance, processability, oxygen and moisture barrier properties, and the like. Failing to satisfy the above-mentioned range may cause problems in that the aluminum layer is readily torn and electrolyte liquid resistance and insulating properties decline when the thickness is less than 10 µm, and formability becomes poor when the thickness exceeds 100 µm.

As the aluminum foil used in the aluminum layer, untreated aluminum foil may be used, however, using degreased aluminum foil is more preferred in terms of providing electrolysis liquid resistance, electrolyte liquid resistance and the like. As the degreasing treatment method, a wet-type or dry-type treatment method may be included.

Examples of the wet-type degreasing treatment may include acid degreasing or alkali degreasing. Examples of the acid used in the acid decreasing may include inorganic acids such as sulfuric acid, acetic acid, phosphoric acid and hydrofluoric acid, and the acid may be used either alone as one type, or as a combination of two or more types. In addition, when necessary, various metal salts may be mixed thereto in order to enhance an etching effect of the aluminum foil. Examples of the alkali used in the alkali degreasing may include strong alkalis such as sodium hydroxide, and a weak alkali type or a surfactant may also be mixed thereto.

Examples of the dry-type degreasing treatment may include a method of degreasing using a process of annealing aluminum at a high temperature.

### b) Preparing Outer Resin Layer

The outer resin layer corresponds to a portion in direct contact with hardware, and therefore, is preferably a resin having insulating properties. Accordingly, as a resin used as the outer resin layer, polyester resins such as polyethylene terephthalate, polybutylene terephthalate, polyethylene naphthalate, polybutylene naphthalate, copolymerized polyester and polycarbonate may be used, or polyamide resins or polyimide resins may be used. Preferably, polyimide resins may be used.

In the outer resin layer as above, a polyimide film may be preferably used as a packaging film of a secondary battery. Polyimide is classified as a general-purpose engineering plastic, and has excellent heat resistance, insulating properties, flexibility and non-flammability with no changes in the properties in a wide range of temperatures from 273 degrees below zero to 400 degrees above zero. Due to such properties, polyimide is used as a material in various fields such as space suits, mobile phone·fuel cell cases, display and military devices, and the like.

The b) preparing of an outer resin layer may be an etching step of spraying an etching solution on an inner direction surface of the outer resin layer using a spray method. In addition, the etching solution may be a solution obtained by mixing any one strong acid of hydrochloric acid (HCl), sulfuric acid (H₂SO₄) and nitric acid (HNO₃) with water.

Specifically, the polyimide film used as the outer resin layer may be prepared after going through surface treatment through etching before lamination. In the etching process, a solution obtained by mixing any one strong acid of hydrochloric acid (HCl), sulfuric acid (H₂SO₄) and nitric acid (HNO₃) with water may be used, and as the etching method, a method of immersing the polyimide film into the mixture solution for a certain period of time or spraying the mixture solution using a spray method is preferred, however, the method is not limited thereto. Particularly, in the spray method, the mixture solution is sprayed on an inner direction surface of the polyimide resin, and then aged for a certain period of time at room temperature. After that, the polyimide film is rinse treated to remove residues, and then used as the outer resin layer.

The inner direction surface of the outer resin layer may have a contact angle of 60 degrees of less, preferably 40 degrees of less, more preferably 20 degrees of less, and even more preferably 10 degrees of less. When the inner direction surface of the outer resin layer has a contact angle of exceeding 60 degrees, adhesive strength decreases under environments of moisture, salt, high heat, ultraviolet rays and the like causing a problem of making lamination on the aluminum layer difficult.

After the b) preparing of an outer resin layer, immersing the outer resin layer into water may be further included. By the immersion into water, the imide bond in the polyimide included in the outer resin layer is hydrolyzed, and active sites may be formed. In addition, as the time of immersion into water increases, active sites capable of reacting and bonding with the first adhesive layer increase, and this may be identified through an increase in the O_{1S}/C_{1S} measurement value obtained by X-ray photoelectron spectroscopy (XPS).

### c) Bonding Outer Resin Layer to First Surface of Aluminum Layer

In forming the outer resin layer on a first surface of the aluminum layer of the aluminum pouch film for a secondary battery of the present invention, a first adhesive layer is coated on the aluminum layer prepared in the step a). Herein, the thickness of the coated first adhesive layer is preferably from 2 µm to 10 µm and more preferably from 3 µm to 5 µm considering adhesiveness with the outer resin layer and thickness after forming. Failing to satisfy the above-mentioned range may cause problems in that adhesiveness decreases when the thickness is less than 2 µm, and cracks may occur when the thickness exceeds 10 µm.

On the first adhesive layer coated as above, the outer resin layer prepared in the step b) is laminated using a dry lamination method or an extrusion lamination method to form the outer resin layer. When laminating the outer resin layer, the laminated outer resin layer preferably has a thickness of 10 µm to 30 µm or greater, and particularly preferably has a thickness of 12 µm to 25 µm. Failing to satisfy the above-mentioned range has problems in that the outer resin layer is readily torn due to declined physical properties when the thickness is less than 10 µm, and formability is reduced when the thickness exceeds 30 µm.

When laminating the outer resin layer, a drying lamination method or an extrusion lamination method may be, although not particularly limited thereto, preferably used to laminate the outer resin layer.

### d) Bonding Inner Resin Layer to Second Surface of Aluminum Layer

In bonding an inner resin layer to a second surface of the aluminum layer of the aluminum pouch film for a secondary battery of the present invention, polyurethane, acid-modified polyolefin resin, epoxy or the like may be used as a second adhesive layer bonding the aluminum layer and the inner resin layer, and as specific examples thereof, maleic anhydride polypropylene (MAHPP) or the like may be used.

The thickness of the second adhesive layer is preferably from 2 µm to 30 µm and more preferably from 3 µm to 15 µm considering adhesiveness with the inner resin layer and thickness after forming. Failing to satisfy the above-mentioned range may cause problems in that adhesiveness decreases when the thickness is less than 2 µm, and cracks may occur when the thickness exceeds 30 µm.

When laminating the inner resin layer on the aluminum layer, a drying lamination method or an extrusion lamination method may be, although not particularly limited thereto, preferably used to laminate the inner resin layer.

Hereinafter, preferred examples are provided in order to illuminate the present invention, however, the following examples are provided only to more readily understand the present invention, and the present invention is not limited thereto.

### Example: Production of Pouch Film

### Preparation of Outer Resin Layer: Preparation Examples 1 to 10

In preparing an outer resin layer, a hydrochloric acid solution having a molar concentration of the following Table 1 was sprayed on an inner direction surface of a polyimide film (product of SKC Kolon PI, Inc.) having a thickness of 25 µm using a spray method in order to conduct an etching process on Preparation Examples 1 to 9. After the spray-type etching, the polyimide resin was aged for 1 hour at room temperature to prepare outer resin layers of Preparation Examples 6 to 9.

In addition, Preparation Examples 1 to 5 completed with the aging were each immersed into water (distilled water). The time of immersion into water varied as in the following Table 1 to prepare outer resin layers of Preparation Examples 1 to 5 to be finally used as an outer resin layer.

**[Table 1]**

| | Molar Concentration of Hydrochloric Acid Solution (M) | Water Immersion Treatment | Time of Water Immersion Treatment (min) |
|---|---|---|---|
| Preparation Example 1 | 5 | 0 | 2 |
| Preparation Example 2 | 5 | 0 | 4 |
| Preparation Example 3 | 5 | 0 | 6 |
| Preparation Example 4 | 5 | 0 | 8 |
| Preparation Example 5 | 5 | 0 | 10 |
| Preparation Example 6 | 1.5 | X | - |
| Preparation Example 7 | 2.5 | X | - |
| Preparation Example 8 | 4 | X | - |
| Preparation Example 9 | 5 | X | - |
| Preparation Example 10 | - | X | - |

### Manufacture of Pouch Film: Examples 1 to 5 and Comparative Examples 1 to 5

### [Examples 1 to 5]

In order to laminate the outer resin layer on a first surface of aluminum foil (product of Dong-il Aluminum Co., Ltd.) having a thickness of 40 µm, a polyurethane adhesive resin (product of HICHEM Co., Ltd.) having a thickness of 4 µm was coated using a gravure roll method, and the polyimide outer resin layer of each of Preparation Examples 1 to 5 was laminated on the aluminum layer using a dry lamination method.

After that, in order to laminate an inner resin layer on a second surface of the aluminum foil, a maleic anhydride-modified polyolefin adhesive (product of HICHEM Co., Ltd.) was coated to a thickness of 4 µm, and cast polypropylene (product of Lotte Chemical (former Homan Petrochemical)) having a thickness of 40 µm was laminated on the aluminum using a dry lamination method to prepare pouch films of Examples 1 to 5.

### [Comparative Examples 1 to 4]

Pouch films of Comparative Examples 1 to 4 were prepared by conducing all processes in the same manner under the same condition as in Examples 1 to 5 except that Preparation Examples 6 to 9 that did not go through the water immersion treatment were used as the outer resin layer instead of Preparation Examples 1 to 5.

### [Comparative Example 5]

A pouch film of Comparative Example 5 was prepared by conducing all processes in the same manner under the same condition as in Examples 1 to 5 except that Preparation Example 10 that did not use the spray-type etching was used as the outer resin layer instead of Preparation Examples 1 to 5.

**[Table 2]**

| | Used Outer Resin Layer |
|---|---|
| Example 1 | Preparation Example 1 |
| Example 2 | Preparation Example 2 |
| Example 3 | Preparation Example 3 |
| Example 4 | Preparation Example 4 |

| Example 5 | Preparation Example 5 |
|---|---|
| Comparative Example 1 | Preparation Example 6 |
| Comparative Example 2 | Preparation Example 7 |
| Comparative Example 3 | Preparation Example 8 |
| Comparative Example 4 | Preparation Example 9 |
| Comparative Example 5 | Preparation Example 10 |

### Experimental Example: Measurement of Contact Angle of Outer Resin Layer, Adhesiveness Evaluation and Elemental Analysis

### (Measurement of Contact Angle)

For the inner direction surface of the polyimide outer resin layer of each of Preparation Examples 1 to 10, a contact angle was measured using a contact angle measurement device (drop shape analyzer (DSA 100)).

Specifically, a polyimide outer resin layer specimen of each of Preparation Examples 1 to 10 having a size of 100 mmx100 mm was placed on a flat plate so that the inner direction surface is visible, and a small amount of distilled water was dropped thereon using a syringe cylinder to be placed in a drop form. After that, a camera lens was placed perpendicular to the surface of the polyimide resin, and a contact angle formed between the inner direction surface of the polyimide resin and the liquid drop was measured three times repeatedly, and the average value is shown as in Table 3.

**[Table 3]**

| | Contact Angle (°) |
|---|---|
| Preparation Example 1 | 41 |
| Preparation Example 2 | 30 |
| Preparation Example 3 | 21 |
| Preparation Example 4 | 14 |
| Preparation Example 5 | 10 |
| Preparation Example 6 | 85 |
| Preparation Example 7 | 73 |
| Preparation Example 8 | 64 |
| Preparation Example 9 | 59 |
| Preparation Example 10 | 96 |

As seen from Table 3, it was identified that the contact angle decreased as the molar concentration of the sulfuric acid solution dispersed using a spray method in the etching process increased. In addition, it was identified that the contact angle decreased as the time of water immersion treatment conducted after the etching increased.

### (Adhesiveness Evaluation)

For the pouch film produced in each of Examples 1 to 5 and Comparative Examples 1 to 5, adhesiveness was evaluated by measuring adhesive strength (N/15 mm) between the polyimide outer resin layer and the first adhesive layer using a UTM apparatus (TESTONE Co., Ltd.) in accordance with the ASTM D882, and the results are shown in the following Table 4.

**[Table 4]**

| | Adhesive Strength (N/15mm) |
|---|---|
| Example 1 | 2.1 |
| Example 2 | 3.2 |
| Example 3 | 4.5 |
| Example 4 | 5.2 |

| Example 5 | 6.5 |
|---|---|
| Comparative Example 1 | 1.2 |
| Comparative Example 2 | 1.4 |
| Comparative Example 3 | 1.6 |
| Comparative Example 4 | 1.7 |
| Comparative Example 5 | 0.8 |

As seen from Table 4, it was identified that adhesive strength increased as the molar concentration of the sulfuric acid solution dispersed using a spray method in the etching process increased. In addition, adhesive strength increased as the time of water immersion treatment conducted after the etching as in Example 5 increased.

### (Elemental Analysis)

In order to analyze elements included in the polyimide outer resin layer of each of Preparation Examples 1 to 5, O₁ₛ/C₁ₛ was measured by X-ray photoelectron spectroscopy (XPS, Quantum 2000 (Physical Electronics)), and the results are shown as in the following Table 5.

**[Table 5]**

| | O_{1S}/C_{1S} |
|---|---|
| Preparation Example 1 | 1.45 |
| Preparation Example 2 | 2.1 |
| Preparation Example 3 | 2.45 |
| Preparation Example 4 | 2.7 |
| Preparation Example 5 | 2.9 |

In Preparation Examples 1 to 5 that are the outer resin layers prepared after going through the water immersion treatment, it was identified through an increase in the O_{1S}/C_{1S} measurement value that, as the time of the water immersion treatment increased, active sites increased by the imide bond in the polyimide being decomposed through hydrolysis.

Simple modifications and variations of the present invention all fall within the category of the present invention, and the specific protection scope of the present invention will become obvious from the appended claims.

## Claims

1. An aluminum pouch film for a secondary battery, the film comprising:
an aluminum layer;
an outer resin layer formed on a first surface of the aluminum layer;
a first adhesive layer bonding the aluminum layer and the outer resin layer;
an inner resin layer formed on a second surface of the aluminum layer; and
a second adhesive layer bonding the aluminum layer and the inner resin layer,
wherein the outer resin layer includes a polyimide.

2. The aluminum pouch film for a secondary battery of claim 1, wherein an inner direction surface of the outer resin layer has a contact angle of 60 degrees or less.

3. The aluminum pouch film for a secondary battery of claim 1, wherein the outer resin layer has O_{1S}/C_{1S}, which is determined by X-ray photoelectron spectroscopy, of 1.0 to 3.5.

4. A method for producing the aluminum pouch film for a secondary battery of claim 1, the method comprising:
a) preparing an aluminum layer;
b) preparing an outer resin layer;
c) bonding the outer resin layer to a first surface of the aluminum layer; and
d) bonding the inner resin layer to a second surface of the aluminum layer.

5. The method for producing the aluminum pouch film for a secondary battery of claim 4, wherein b) is spraying an etching solution on an inner direction surface of the outer resin layer using a spray method.

6. The method for producing the aluminum pouch film for a secondary battery of claim 4, further comprising, after b), immersing the outer resin layer into water.

7. The method for producing the aluminum pouch film for a secondary battery of claim 5, wherein the etching solution is a solution obtained by mixing any one strong acid of hydrochloric acid (HCl), sulfuric acid (H₂SO₄) and nitric acid (HNO₃) with water.
